# EUROPÄISCHE PATENTANMELDUNG

(11) **EP 2 320 289 A2**
(43) Veröffentlichungstag der Anmeldung: **11.05.2011**
(21) Anmeldenummer: 10186958.4
(22) Anmeldetag: 08.10.2010
(51) Int. Cl.: G05B 23/02

(54) **Verfahren und Vorrichtung zur Überwachung eines Prozesses und/oder einer technischen Anlage**

(30) Priorität: 30.10.2009 DE 102009051446
(71) Anmelder: ABB Technology AG, 8050 Zürich (CH)
(72) Erfinder: Blank, Frederik, 69121 Heidelberg (DE); Gauder, Markus, 68766 Hockenheim (DE); Lauxtermann, Stefan, 32457 Porta Westfalica (DE); Schmidt, Werner A., 68542 Heddesheim (DE)
(74) Vertreter: Partner, Lothar

(57) **Zusammenfassung**

Verfahren zur effizienten Überwachung eines Prozesses und/oder einer technischen Anlage, wobei wenigstens eine untere und/oder wenigstens eine obere Alarmgrenze vorausschauend bestimmt und/oder Kenn- und/oder Messgrößen sowie diesbezügliche Werte des jeweiligen Prozesses und/oder der jeweiligen technischen Anlage ermittelt werden und mit vorausschauend bestimmten Alarmgrenzwerten wenigstens einer unteren und/ oder wenigstens einer oberen Alarmgrenze verglichen werden und wobei bei Unterschreiten einer unteren Alarmgrenze oder bei Überschreiten einer oberen Alarmgrenze durch eine ermittelte Größe und/oder einen diesbezüglich ermittelten Wert, insbesondere einen gemessenen, simulierten oder berechneten Wert, ein Alarm generiert wird, und wobei wenigstens eine untere und/oder wenigstens eine obere Alarmgrenze zustandsbasiert und/oder umgebungsabhängig änderbar und dynamisch, insbesondere gemäß dem Prozess- und/oder Anlagenverhalten, anpassbar ist.

Die Erfindung betrifft des Weiteren ein System zur Durchführung des Verfahrens.

## Beschreibung

### Beschreibung

Die Erfindung betrifft ein Verfahren sowie eine Vorrichtung zur Überwachung eines Prozesses und/oder einer technischen Anlage, wobei Prozesswerte ermittelt, insbesondere gemessen, simuliert oder berechnet, und mit jeweilig vorbestimmten unteren und/ oder oberen Grenzwerten verglichen werden, und bei Unterschreiten wenigstens eines unteren Grenzwerts oder bei Überschreiten wenigstens eines oberen Grenzwerts, ein Alarmsignal gegeben oder erzeugt wird.

Während des Betriebs von Anlagen und/oder Versorgungsnetzen kommt der Überwachung und Steuerung von Prozessen eine entscheidende Rolle zu. Zur Überwachung und Steuerung werden Vorrichtungen eingesetzt, die Daten und Werte erfassen und visualisieren sowie Alarmsignale geben.

Zur Realisierung eines Alarmmanagement-Systems überwacht eine Vorrichtung im Wesentlichen physikalische Größen und diesbezügliche Werte. Sobald einer der überwachten Werte wenigstens einen ihm zugeordneten Grenzwert überschreitet oder unterschreitet, wird ein Alarm erzeugt und dieser in einer entsprechenden Alarmliste gemeldet und visualisiert. Bei den Grenzwerten handelt es sich um sogenannte Alarmgrenzen. Je nach Auslegung des Alarmsystems schließt der Begriff oberer/unterer Grenzwert im Folgenden einen oder mehrere obere sowie einen oder mehrere untere Grenzwerte ein, beispielsweise low, low low, high oder high high, wobei die verschiedenen Alarm-Grenzwerte und / oder Alarmbereiche in aller Regel die verschiedene Stufen des Alarmzustandes darstellen beziehungsweise bezeichnen.

Idealerweise werden Alarmsignale nur dann erzeugt, wenn beispielsweise ein Anlagenfahrer oder auch Benutzer reagieren soll, das heißt eine Handlung vornehmen oder auch Maßnahmen treffen soll. Vor diesem Hintergrund ist die Anzahl der tatsächlich auftretenden Alarmsignale möglichst gering zu halten. Es sollen nur für den jeweiligen Prozess beziehungsweise den Prozessablauf relevante oder notwendige Alarmsignale ausgelöst werden für welche die Durchführung einer Maßnahme folgen muss.

Neben Alarmsignalen, die durch Controller im Feld, das heißt bei einer lokalen Prozessautomatisierung, und insbesondere auf Controllerebene ausgelöst werden, gibt es auch Alarmsignale, die in einem umfassenden Überwachungssystem, nämlich einer Bedienstation, und insbesondere auf Leitsystemebene erzeugt werden. Diese Alarmsignale werden häufig auch als "Soft Alarms" oder "Smart-Alarms" bezeichnet.

Aus dem Stand der Technik ist es bisher bekannt, Grenzwerte für beispielsweise die "Soft Alarms" zur Überwachung von Werten in Prozessen statisch auf einen Konstantwert einzustellen und dauerhaft festzulegen, wobei dieser Wert auf Erfahrungswerten basieren kann.

Die statisch eingestellten konstanten Grenzwerte sowie daraus gebildeten Alarmgrenzen beruhen auf historischen Experimenten, Erfahrungen oder Expertenwissen. Diese Grenzwerte werden im Rahmen des Engineerings einer Vorrichtung zur Überwachung von Prozessen festgelegt.

Äußere Faktoren können dabei allerdings zu Fehlalarmsignalen führen. Ein äußerer Faktor kann beispielsweise eine Änderung der Außentemperatur und/oder der Luftfeuchte und/oder einer anderen messbaren physikalischen Größe sein. Beispielsweise können Veränderungen im Verbrauch als erhöhter Fluß gemessen oder registriert werden. Insbesondere können die jeweiligen Prozesswerte oder Komponenten einer Anlage durch Schwankungen äußerer Faktoren oder durch sich verändernde Betriebszustände beeinflusst und/oder verändert und gegebenenfalls ein entsprechender Alarm ausgelöst werden, ohne dass ein direkter Fehler oder eine Fehlfunktion an der Anlage und/oder dem Versorgungsnetz aufgetreten ist.

Um eine effiziente Überwachung und damit auch Handhabung beziehungsweise Betrieb einer technischen Anlage und/oder eines Versorgungsnetzes sowie auch einen möglichst reibungslosen Prozessablauf gewährleisten zu können, erscheint es demgemäß wünschenswert und zielführend, das Auftreten von derartigen Alarmsignalen, die nicht durch kritische Werte einer Anlage und/oder einen kritischen Anlagen- und/oder Prozesszustand initiiert, sondern vielmehr durch weitgehend unkritische äußere Faktoren und/oder sich verändernde Betriebszustände verursacht sind, weitestgehend zu reduzieren. Diese Alarmsignale werden im Folgenden auch als Fehlalarm bezeichnet.

Der Erfindung liegt daher die Aufgabe zugrunde, ein Verfahren und eine Vorrichtung der eingangs genannten Art derart auszugestalten und weiterzubilden, dass ein störungsarmer Betrieb einer alarmgesicherten Anlage dauerhaft durchführbar ist und vorgenannte Fehlalarme weitestgehend vermieden sind.

Erfindungsgemäß wird die voranstehende Aufgabe durch ein Verfahren zur effizienten Überwachung eines Prozesses und/oder einer technischen Anlage und/oder eines Versorgungsnetzes mit den Merkmalen des Patentanspruchs 1 gelöst. Vorteilhafte Ausgestaltungen und Weiterbildungen des Verfahrens sowie eine Vorrichtung zur effizienten Überwachung eines Prozesses und/oder einer technischen Anlage und/oder eines Versorgungsnetzes sind in weiteren Ansprüchen und der nachfolgenden Beschreibung angegeben.

Beim erfindungsgemäßen Verfahren zur effizienten Überwachung eines Prozesses und/oder einer technischen Anlage und/der eines Versorgungsnetzes werden wenigstens eine untere und/oder wenigstens eine obere Alarmgrenze vorausschauend bestimmt und/oder Kenn- und/oder Messgrößen sowie diesbezügliche Werte des jeweiligen Prozesses und/oder der jeweiligen technischen Anlage und/oder Versorgungsnetzes ermittelt, mit vorausschauend bestimmten Alarmgrenzwerten wenigstens einer unteren und/ oder wenigstens einer oberen Alarmgrenze verglichen und bei Unterschreiten einer unteren Alarmgrenze oder bei Überschreiten einer oberen Alarmgrenze durch eine ermittelte Größe und/oder einen diesbezüglich ermittelten Wert, insbesondere einen gemessenen, simulierten oder berechneten Wert, ein Alarmsignal generiert, wobei wenigstens eine untere und/oder wenigstens eine obere Alarmgrenze zustandsbasiert und/oder umgebungsabhängig änderbar und dynamisch, insbesondere gemäß dem Prozess- und/oder Anlagen- und/oder Netzverhalten, anpassbar ist.

In vorteilhafter Ausgestaltung ist dabei vorsehbar, dass die vorausschauende Vorbestimmung wenigstens einer unteren und/oder einer oberen Alarmgrenze und/oder die jeweilige Grenzwert- beziehungsweise Alarmgrenzenanpassung automatisiert durchführbar sind.

Dementsprechend ist erfindungsgemäß zunächst erkannt worden, dass für eine effizientere Überwachung Alarmgrenzen sowie die diesbezüglichen Grenzwerte so gewählt werden müssen, dass sie alle die Werte abdecken, die für eine korrekt beziehungsweise störungsfrei funktionierende Anlage oder ein Versorgungsnetz zulässig sind. Zugleich dürfen aber ermittelte Werte, insbesondere gemessene, simulierte oder berechnete Werte, welche als kritisch zu erachten sind, nicht unberücksichtigt gelassen werden. Weiter ist erkannt worden, dass statisch festgelegte konstante Alarmgrenzen und Grenzwerte die Gefahr bergen, dass Bereiche für zulässige, zu ermittelnde Werte, insbesondere zu messende, zu simulierende oder zu berechnende Werte, zu eng gewählt werden. Es ist aber auch erkannt worden, dass eine zu unspezifische Bestimmung von Alarmgrenzen und/oder Grenzwerten bewirken kann, dass kritische Zustände einer Anlage nicht rechtzeitig und/oder zuverlässig detektiert werden.

Durch eine Änderung beziehungsweise Anpassung einer Alarmgrenze und/oder eines Alarmgrenzenverlaufs ist eine variable und dynamische Anpassung an die jeweiligen Bedingungen eines Systems bewirkbar. Die jeweilige Anpassung und die sich daraus ergebende angepasste Alarmgrenze beziehungsweise der sich daraus ergebende Alarmgrenzenverlauf trägt dabei dem unterschiedlichen Verlauf zulässiger ermittelter Werte Rechnung und vermeidet Fehlalarmsignale. Insoweit ist eine effiziente Überwachung sowie ein daraus resultierender störungsarmer Betrieb einer derart alarmgesicherten Anlage dauerhaft durchführbar.

Folglich ist die eingangs genannte Aufgabe gelöst.

Vor diesem Hintergrund ist vorteilhaft vorsehbar, dass mindestens eine untere und/oder eine obere Alarmgrenze beziehungsweise ein demgemäßer Alarmgrenzenverlauf basierend auf und unter Verwertung von historischen und/oder empirischen und/oder simulierten und/oder berechneten Prozess- und/oder Zeitreiheninformationen, insbesondere Prozesswerte sowie deren zugehörige Umgebungs- und/oder Zustandbedingungen, vorausschauend vorbestimmt wird.

Eine weitere Ausgestaltung sieht vor, dass mindestens eine untere und/ oder eine obere Alarmgrenze in Abhängigkeit von wenigstens einer prozessinternen oder prozessexternen Peripheriegröße änderbar und/oder anpassbar ist. Bei einer Peripheriegröße handelt es sich nicht um einen zu ermittelnden, insbesondere zu messenden bzw. gemessenen Wert, der mit den jeweiligen Grenzwerten verglichen wird, sondern um eine Größe, die externe oder interne Faktoren repräsentiert, die auf den überwachten Prozess Einfluss nehmen. Hierdurch können die Alarmgrenzen an prozessexterne oder prozessinterne Änderungen dynamisch angepasst werden, die auf die zu messenden Werte Einfluss nehmen.

In einer bevorzugten Ausgestaltung weist der jeweilige untere und/ oder obere Grenzwert in einem vorbestimmbaren ersten Zeitintervall, insbesondere bei einem sich über die Zeit ändernden zu messenden beziehungsweise zu erfassenden Wertverlauf, einen anderen Betrag auf als in einem darauf folgenden vorbestimmbaren zweiten Zeitintervall. Hierdurch ist sichergestellt, dass der oder die Grenzwerte einem vorbekannten oder bestimmten zeitlichen Verlauf zu messender beziehungsweise zu erfassender zulässiger Werte folgen können. Auf diese Weise können beispielsweise auch tages-, wochen- oder jahreszeitbedingte Schwankungen berücksichtigt und/oder weitestgehend kompensiert werden.

Besonders bevorzugt wird der jeweilige untere und/oder obere Grenzwertverlauf beziehungsweise die jeweilige untere und/oder obere Alarmgrenze vorausschauend ermittelt, indem in Abhängigkeit einer Vorhersage von äußeren Umgebungszuständen oder internen Prozesszuständen die jeweiligen Kenn- und/oder Messgrößen sowie die diesbezüglichen Werte vorausschauend und/oder zeitabhängig ermittelt werden und anhand der ermittelten Kenn- und/oder Messgrößen für den jeweiligen Zeitpunkt und bis zur nächsten Vorhersage ein unterer und/oder ein oberer Grenzwert festgelegt wird. Über die verschiedenen Zeitpunkte ist somit auch innerhalb eines vorbestimmbaren Intervalls ein entsprechender Grenzwertverlauf ermittel- und/oder festlegbar.

Durch diese konkrete Ausgestaltung kann ein umgebungsabhängiger, bereits bekannter, insbesondere bereits historisch bekannter, Verlauf der zu messenden Werte als Grundlage für die Bestimmung der Grenzwerte und/oder der jeweiligen Alarmgrenzen verwendet werden. Ein vorhersehbarer und erwarteter Abfall oder Anstieg der zu messenden Werte kann hierdurch berücksichtigt und/oder verwertet und kompensiert werden, ohne dass Fehlalarmsignale ausgelöst werden.

In einer weiteren vorteilhaften Ausführung wird zur vorausschauenden Ermittlung von Alarmgrenzen, insbesondere mittels Vorhersage von äußeren Umgebungszuständen oder internen Prozesszuständen, eine Abschätzung der Kenn- und/oder Messgrößen sowie der diesbezüglichen Werte durchgeführt, wobei der zukünftige Verlauf von Mess-, Simulations- oder Berechnungs-Größen und/oder diesbezüglicher Werte unter Verwendung und/oder Anwendung von statistischen Methoden, insbesondere der Signalverarbeitung, Expertensystemen und/oder Erfahrungswerten ermittelt und darauf basierend die jeweiligen Alarmgrenzen bestimmt werden.

Demgemäß wird eine zeitliche Vorhersage der eigentlich zu überwachenden Größe, wobei es sich dabei um eine beliebige physikalische Größe oder einen Messwert oder einen berechneten Wert oder einen simulierten Wert handeln kann, durchgeführt und basierend auf der jeweiligen Vorhersage die Alarmgrenzen bestimmt, insbesondere berechnet und festgelegt oder es werden die zukünftigen oberen und/oder unteren Alarmgrenzen beziehungsweise Alarmgrenzenverläufe ermittelt.

In einer weiteren bevorzugten Ausgestaltung wird der wenigstens eine dynamisch anpassbare untere und/oder obere Grenzwert in Abhängigkeit von vorhergesagten und/oder vorausschauend ermittelten, zu erfassenden und/oder messenden Kenn- und/oder Messgrößen sowie diesbezüglicher Werte, ermittelt und bestimmt, sowie insbesondere vorhergesagt.

Weiterbildend kann zur Vorhersage eine Abschätzung der Kenn- und/oder Messgrößen sowie der diesbezüglichen Werte durchgeführt werden und/oder es können als vorhergesagte Werte simulierte, berechnete oder auch geschätzte Werte verwendet werden. Zur Simulation und/oder Abschätzung sind dabei wiederum empirische und/oder historische Informationen beziehungsweise Daten, sowie insbesondere Zeitreiheninformationen, anwendbar.

Vor diesem Hintergrund werden die zu messenden und/oder zu ermittelnden Kenn- und/oder Messgrößen sowie diesbezüglichen Werte zu Beginn eines oder mehrerer Zeitintervalle vorausschauend bestimmt und insbesondere statistisch ermittelt.

Ein zur vorausschauenden Grenzwertermittlung eingesetztes Modell, mit dessen Hilfe ein zukünftiger Wert vorausschauend ermittelt wird, muss dabei hinreichend genau sein, um den zukünftigen Verlauf der real gemessenen Werte zuverlässig ab- und/oder nachzubilden und insbesondere im Voraus zu schätzen oder abzuschätzen. Dieses Modell kann durch mathematisch-physikalische Gleichungen, datenbasierte Methoden, wie Fuzzy-Logic, Neuronale Netze, Kalman-Filter, Support Vector Machines, etc., lernende Systeme oder andere Methoden beschrieben sein. Als Grundlage für eine Schätzung können historische Daten und/oder Expertenwissen aber auch weitere Prognosedaten sowie -Informationen, wie zum Beispiel Wetterdaten, verwendet werden.

Durch das Einbringen von Expertenwissen und/oder Methoden der Signalverarbeitung und/oder unter Zuhilfenahme von lernenden Systemen und/oder von Signalmodellen können nach einer bestimmten Betriebszeit oder durch gezielte Analyse von historischen und/oder empirischen Daten optimierte obere und untere Alarmbänder, wobei ein Alarmband den Abstand zwischen vorhergesagtem Wert und unterer beziehungsweise oberer dynamischer Alarmgrenze bezeichnet, ein optimierter Abstand zwischen zwei Zeitpunkten, zu denen eine Schätzung vorgenommen wird, und weitere Parameter eingestellt werden. Hierbei kann während einer Trainingszeit beispielsweise der Anlagenfahrer gegebenenfalls auf Grundlage seiner Erfahrung und durch Kommentierung von Alarmen, wie beispielsweise true alarm, false-positive alarm, false negative alarm eine dynamische Anpassung und/oder Abstimmung eines derartig ermittelten Alarmbandes herbeiführen und/oder bewirken.

Aufgrund der vorausschauend ermittelten, insbesondere auch vorhergesagten Grenzwerte und damit der dynamischen Alarmgrenzen lassen sich äußere Umgebungszustände oder interne Prozesszustände deutlich besser berücksichtigen und dadurch auch die Anzahl an Alarmsignalen und insbesondere Fehlalarmen reduzieren und resultierend die Alarmqualität verbessern.

Durch vorgenannte Vorgehensweise und die gebildeten Alarmgrenzen beziehungsweise Alarmgrenzverläufe wird vorausschauend berücksichtigt, dass es zu jedem Zeitpunkt, auch in der Zukunft, einen umgebungsabhängigen Bereich mit zulässigen Werten in der Art eines Bandes, gibt, so dass für gemessene Werte die innerhalb des Bandes liegen keine Alarme ausgelöst werden.

In einer weiteren Ausgestaltung wird wenigstens ein dynamischer unterer Grenzwert, der veränderbar ist, mit wenigstens einem weiteren unteren, statischen Grenzwert verglichen und/oder wird wenigstens ein dynamischer oberer Grenzwert, der veränderbar ist, mit einem weiteren oberen, statischen Grenzwert verglichen. Der eine obere, statische Grenzwert stellt dabei einen absoluten Maximalwert dar, der unter keinen Umständen, auch nicht von einem dynamisch anpassbaren Grenzwert beziehungsweise einer diesbezüglichen Alarmgrenze, überschritten werden darf. Der untere, statische Grenzwert stellt dabei einen absoluten Minimalwert dar, der unter keinen Umständen unterschritten werden darf.

Hierdurch ist sichergestellt, dass ermittelte, veränderliche Grenzwerte prozesskritische Grenzen stets einhalten. Bei Über- oder Unterschreiten des statischen Maximalwerts bzw. des Minimalwerts wird stets ein Alarmsignal erzeugt. Um zu verhindern, dass es an denjenigen Stellen, wo der obere bzw. untere dynamische Alarm-Grenzwert den statischen Alarm-Grenzwert über- bzw. unterschreitet zu einer Reduzierung der Anzahl der Alarmgrenzen kommt, kann auch ein zusätzlich einzuhaltender minimaler Abstand zwischen dynamischer oberer Alarmgrenze und statischer oberer Alarmgrenze bzw. zwischen dynamischer unterer Alarmgrenze und statischer unterer Alarmgrenze definiert werden

Besonders bevorzugt werden die gemessenen, simulierten und berechneten Werte mit einem jeweiligen ersten unteren, veränderlichen/dynamischen und einem zweiten unteren, statischen Grenzwert und/oder mit einem jeweiligen ersten oberen, veränderlichen/dynamischen und einem zweiten oberen, statischen Grenzwert verglichen. Hierdurch ist sicher gestellt, dass bei Über- oder Unterschreiten eines Maximalwerts bzw. eines Minimalwerts durch die gemessenen Werte stets ein Alarmsignal erzeugt wird.

Beispielhaft kann es sich bei den ermittelten Werten dabei um Drücke und/ oder Durchflussmengen und/ oder Durchflussgeschwindigkeiten und/oder Temperaturen, insbesondere von Flüssigkeiten wie Wasser oder Öl oder anderen chemischen Stoffen oder auch von Gasen handeln. Hierdurch kann das hier beschriebene Verfahren auch im Bereich von Wasserversorgungsunternehmen beziehungsweise Wasserversorgungsnetzen aber auch der Chemischen Industrie sowie im Bereich von Öl und Gas eingesetzt werden. Auch andere Anwendungsbereiche wie beispielsweise in der Energieverteilung und/oder Energieerzeugung aber auch generell der Prozessautomation sind denkbar und realisierbar.

Die eingangs genannte Aufgabe wird des Weiteren durch ein System zur effizienten Überwachung eines Prozesses und/oder einer technischen Anlage, mit einer Überwachungseinrichtung, welche Kenn- und/oder Messgrößen des jeweiligen Prozesses und/oder der jeweiligen technischen Anlage ermittelt sowie diesbezügliche Werte erfasst, insbesondere misst, simuliert oder berechnet, und mit vorausschauend bestimmten Alarmgrenzwerten wenigstens einer unteren und/oder einer oberen Alarmgrenze vergleicht und die Überwachungseinrichtung bei Unterschreiten einer unteren Alarmgrenze oder bei Überschreiten einer oberen Alarmgrenze durch einen ermittelten Wert, insbesondere einen gemessenen, simulierten oder berechneten Wert, einen Alarm generiert, wobei mittels der Überwachungseinrichtung wenigstens eine untere und/oder wenigstens eine obere Alarmgrenze zustandsbasiert und/oder umgebungsabhängig änderbar und dynamisch, insbesondere gemäß dem Prozess- und/oder Anlagenverhalten, anpassbar ist.

In einer vorteilhaften Ausgestaltung ist die jeweilige Alarmgrenzenanpassung beziehungsweise diesbezügliche Grenzwertanpassung mittels der Überwachungseinrichtung automatisiert durchführbar beziehungsweise bewirkbar.

Auch ist vorteilhaft vorsehbar, dass die ermittelten und/oder angepassten Alarmgrenzwerte beziehungsweise diesbezüglichen Alarmgrenzverläufe vorbestimmbar und/oder von Außen, beispielsweise durch Bedienpersonal, definierbar sind.

In einer weiteren Ausgestaltung ist wenigstens eine Alarmgrenzengebereinrichtung vorgesehen, mit welcher wenigstens eine untere und/oder wenigstens eine obere Alarmgrenze vorausschauend vorbestimmbar ist.

Vorteilhaft ist die Alarmgrenzengebereinrichtung dabei in den Überwachungseinrichtung integrierbar.

In einer weiteren Ausgestaltung weist die Überwachungseinrichtung wenigstens eine Datenverarbeitungseinrichtung, insbesondere in der Art eines Mikrokontrollers, eines Mikrocomputers, einer SPS oder eines ASICS auf.

Weiterhin sind vorteilhaft Eingabe- und/oder Anzeigemittel zur manuellen Erfassung und Beeinflussung von Grenzwerten sowie deren Anzeige und/oder Darstellung vorsehbar.

Auch umfasst das System in einer weiteren vorteilhaften Ausführung wenigstens eine Schnittstelle zur drahtlosen Kommunikation, insbesondere mittels Bluetooth und/oder WLAN, und/oder drahtgebundenen Kommunikation, insbesondere mittels USB, Ethernet, RS232, SCSI, Profibus, Profinet und dergleichen, mit wenigstens einem Leitsystem, insbesondere einem Prozessleitsystem, sowie einer oder mehreren Messstellen.

Vorteilhaft ist auch ein Datenspeicher vorsehbar auf welchem historisch und/oder empirisch ermittelte Zeitreiheninformationen sowie Daten abrufbar gespeichert sind.

In vorteilhafter Ausgestaltung umfasst vorgenannte Vorrichtung und insbesondere deren Überwachungseinrichtung Mittel zur Ausführung wenigstens einer der vorbeschriebenen Verfahrensausprägungen, so dass, auch um Wiederholungen in Bezug auf die erfinderische Tätigkeit zu vermeiden, auf die Ausführungen zu dem Verfahren als solchem verwiesen und Bezug genommen wird.

In vorteilhafter Ausgestaltung ist die zuvor genannte Vorrichtung dafür eingerichtet und vorbereitet sämtliche Schritte einzeln oder in Kombination durchbeziehungsweise auszuführen, die durch das Verfahren beschrieben und/ oder beansprucht sind.

Das hier beschriebene Verfahren und die hier beschriebene Vorrichtung sind dabei insbesondere zur Überwachung von sog. "Soft Alarms" oder "Smart Alarms" einsetzbar, die beispielsweise auf Leitsystemebene in einem umfassenden Überwachungssystem, insbesondere in einer Bedienstation, erzeugt werden. Grundsätzlich ist jedoch auch die Überwachung von Alarmen auf Kontrollerebene, das heißt von auf der Kontroll- und/oder Steuerungsebene eingesetzten Geräten wie PLC's, RTU's und dergleichen bewirkbar.

Die weitere Darlegung der Erfindung erfolgt anhand einiger Figuren und Ausführungsbeispiele.

In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: ein Zeit-Wert-Diagramm, in welchem die in Abhängigkeit von der Zeit aufgetragenen Werte einen ersten unteren statischen Grenzwert unterschreiten,
- Fig. 2: ein Zeit-Wert-Diagramm, in welchem ein unterer Grenzwert in einem bestimmten Zeitintervall herabgesetzt wird,
- Fig. 3: ein Zeit-Wert-Diagramm, in welchem die Grenzwerte dynamisch berechnet werden, und
- Fig. 4: ein Zeit-Wert-Diagramm, in welchem zu bestimmten Zeitpunkten zu messende Werte durch Schätzung vorhergesagt werden.

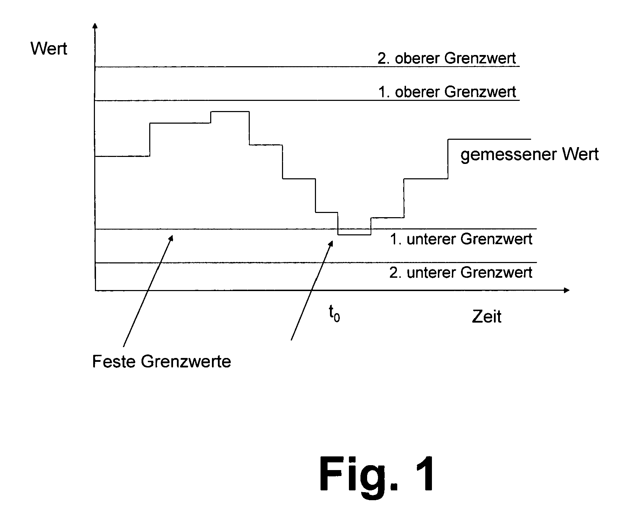

Das Zeit-Wert-Diagramm gemäß Fig. 1 beschreibt ein Verfahren zur Überwachung eines Prozesses, bei welchem Werte ermittelt, insbesondere gemessen, simuliert oder berechnet, und mit gesetzten unteren und oberen Alarm-Grenzwerten verglichen werden, wobei bei Unterschreiten eines unteren Alarm-Grenzwerts oder Überschreiten eines oberen Alarm-Grenzwerts durch einen ermittelten, insbesondere gemessenen oder simulierten oder berechneten, Wert ein Alarmsignal gegeben wird.

Fig. 1 zeigt ein Zeit-Wert-Diagramm des Stands der Technik, in welchem die beispielhaft ermittelten Werte einen ersten unteren statischen Alarm-Grenzwert unterschreiten. In diesem Zeit-Wert-Diagramm (Zeitreihe) sind die Alarm-Grenzwerte, nämlich ein erster und ein zweiter oberer Alarm-Grenzwert und ein erster und ein zweiter unterer Alarm-Grenzwert, statisch festgelegt. Die Alarmgrenzen sind in diesem Falle basierend auf jeweils einem festen beziehungsweise konstanten Grenzwert vorbestimmt und festgelegt, wobei eine manuelle Anpassung beispielsweise im Rahmen des Engineering-Prozesses grundsätzlich möglich ist.

Wie gezeigt, unterschreitet zum Zeitpunkt t0 ein ermittelter Wert den ersten unteren Alarm-Grenzwert. Hierdurch wird ein Alarmsignal gegeben. Dieses Alarmsignal kann unter Umständen jedoch ein Fehlalarmsignal sein.

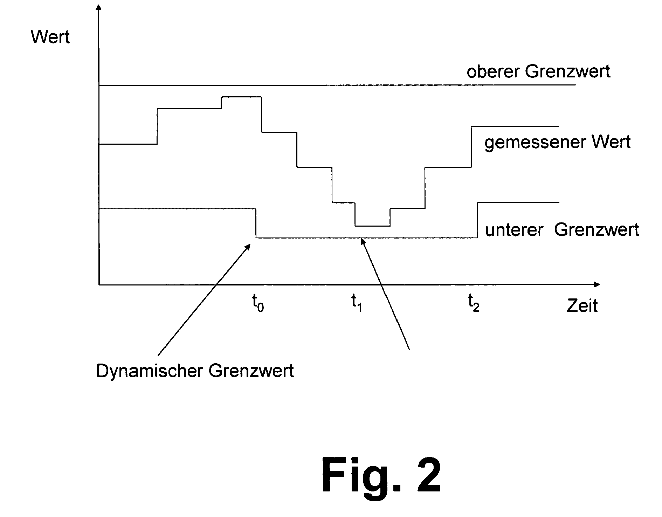

Das Diagramm gemäß Fig. 2 beschreibt ein Verfahren zur Überwachung eines Prozesses, bei welchem Werte ermittelt, insbesondere gemessen, simuliert oder berechnet und mit gesetzten unteren und/ oder oberen Alarm-Grenzwerten verglichen werden, wobei bei Unterschreiten eines jeweiligen unteren Grenzwerts oder Überschreiten eines jeweiligen oberen Grenzwerts durch einen ermittelten Wert, insbesondere gemessenen Wert, ein Alarm generiert und/oder gemeldet wird. Der untere Alarm-Grenzwert kann während der laufenden zeitabhängigen Messung, Simulation und / oder Berechnung zustandsbasiert und/oder umgebungsabhängig dynamisch angepasst und/oder geändert werden.

Fig. 2 zeigt ein Zeit-Wert-Diagramm (Zeitreihe), in welchem der untere Alarm-Grenzwert innerhalb eines vorbestimmbaren Zeitintervalls herabgesetzt wird. In diesem Ausführungsbeispiel wird der untere Grenzwert im Zeitintervall t0 bis t2 reduziert, da die in diesem Intervall ermittelten und/oder gemessenen Werte für einen einwandfreien Prozessverlauf zulässig sind. Der untere Grenzwert weist daher in einem ersten Zeitintervall einen anderen Alarm-Wert auf als in einem darauf folgenden zweiten Zeitintervall. Durch Anpassung der Alarmgrenzen an die vorherrschenden Gegebenheiten wird zum Zeitpunkt t1 kein Fehlalarmsignal gegeben, beziehungsweise ein solches vermieden, so dass eine sinnvolle Reduzierung der Anzahl an Alarmen bewirkbar ist.

Die Grenzwerte bzw. die Alarmgrenzen werden in Abhängigkeit von beziehungsweise unter Verwertung prozessexternen oder prozessinternen Peripheriegrößen, Simulationen oder Berechnungen periodisch und/oder zyklisch neu ermittelt und demgemäß zeit- und ereignisabhängig angepasst oder geändert. Diese neu ermittelten, insbesondere berechneten, Grenzwerte werden automatisiert eingetragen und/oder den bisherigen Alarmgrenzen aufgeprägt. Hierdurch ist die Erzeugung beziehungsweise Generierung von Alarmsignalen, insbesondere "Soft Alarms" oder "Smart Alarms", in Abhängigkeit von sich dynamisch ändernden Grenzwerten und/oder Alarmgrenzen bewirkbar und effizient gestaltbar.

In einer weiteren Ausgestaltung können die ermittelten, insbesondere gemessenen, simulierten oder berechneten Werte und die jeweiligen Grenzwerte der Fig. 2 beispielsweise auch Drücke, Flüsse oder Temperaturen repräsentieren, wie sie beispielsweise bei einem Wasser- oder Gasversorgungsunternehmen, der Chemischen Industrie oder in der Energieverteilung und/oder Energieerzeugung überwacht werden.

Ein unterer Grenzwert der Drücke eines Gases oder einer Flüssigkeit könnte beispielsweise 4 bar und ein oberer Grenzwert könnte 8 bar betragen. Ein Alarm beziehungsweise dementsprechendes Alarmsignal wird dann generiert, wenn ein gemessener Wert eines Drucks weniger als 4 bar beträgt oder mehr als 8 bar beträgt.

Bei einem geringeren Bedarf kann jedoch auch ein geringerer unterer Grenzwert ausreichend sein, um eine zuverlässige Versorgung, insbesondere Gas- oder Wasserversorgung, zu gewährleisten. Dies ist beispielsweise nachts der Fall, wenn weniger Verbraucher Gas oder Wasser benötigen. Für ein Versorgungsunternehmen ist es durch Anpassung des Drucks möglich, beispielsweise die Leckagerate zu verringern und die Beanspruchung des jeweiligen Leitungsnetzes zu verringern. Dennoch sollten zu jedem Zeitpunkt noch zuverlässige Alarmsignale gegeben und der Zustand des Systems überwacht werden können, so dass ein Betrieb der jeweiligen Anlage und/oder des Netzes innerhalb der zulässigen, aus der Auslegung des Prozesses, und/oder der jeweiligen Anlage und/oder des Versorgungsnetzes hervorgehenden Betriebsgrenzen ermöglicht ist.

Auch können durch eine vorausschauende Bestimmung und dynamische Anpassung der Alarmgrenzen beispielsweise variierende Entnahmemengen, Flüsse, Drücke, Leistungen, Ströme und dergleichen aufgrund von Urlaubs- sowie Ferienbeziehungsweise Reisezeiten, Feiertagen, Sommer- und Winterzeit und dergleichen effizient berücksichtigt und verwertet werden.

Im hier beschriebenen konkreten Beispiel wird der untere Grenzwert automatisch im Verlauf von t0 nach t1 von 4 auf 3 bar abgesenkt. Es wird also nur dann ein Alarmsignal ausgelöst, falls der gemessene Druck unter 3 bar fällt.

Diese systembezogene, zustandsbasierte und ereignisabhängige Anpassung des Grenzwerts hat den Vorteil, dass weniger Alarme entstehen und die Alarme einen kritischen Zustand des Systems besser widerspiegeln. Die dynamische Änderung der Grenzwerte in Abhängigkeit von äußeren oder inneren Faktoren hat den positiven Effekt, dass Fehlalarme, die durch erlaubte Schwankungen der gemessenen bzw. zu messenden Werte entstehen, sog. Fehlalarme, nun nicht mehr oder zumindest in reduzierter Anzahl auftreten.

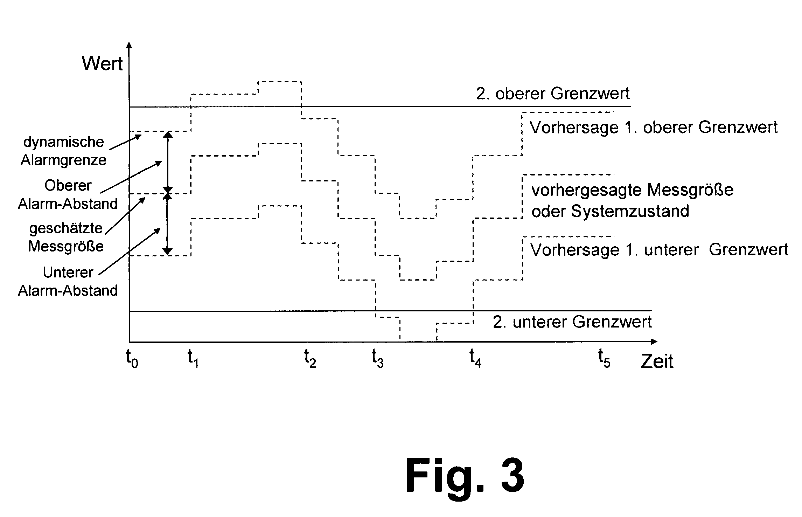

Fig. 3 zeigt ein Zeit-Wert-Diagramm, in welchem der Verlauf einer prognostizierten , geschätzten, berechneten oder simulierten Mess- oder zu überwachenden Größe sowie der diesbezüglichen Alarmgrenzen angegeben ist. In Abhängigkeit von prognostizierten äußeren und/ oder inneren Faktoren können die jeweiligen Alarm-Grenzwerte und/oder Alarmgrenzen ebenfalls prognostiziert werden. Einem vorbestimmbaren Zeitintervall werden dabei definierte erste obere und erste untere Grenzwerte beziehungsweise Alarmgrenzen zugeordnet. Der jeweilige untere und der jeweilige obere Alarm-Grenzwert werden in Abhängigkeit von vorhergesagten, zu messenden Werten ermittelt und vorhergesagt.

In Fig. 3 ist konkret dargestellt, wie sich die Grenzwerte in Abhängigkeit von vorhergesagten, zu ermittelnden Werten (Messgröße oder Systemzustand) ändern. Die Grenzwerte verlaufen in äquidistanten Abständen parallel zum jeweils vorhergesagten, zu messenden Wert. Ein Abstand zwischen dem vorhergesagten, zu messenden Wert und dem jeweils zugehörigen berechneten Grenzwert wird als Alarm-Abstand bezeichnet.

Der Betrag des Alarm-Abstands des ersten oberen Grenzwerts zum vorhergesagten Wert muss dabei nicht identisch mit dem Betrag des Alarm-Abstands des unteren ersten Grenzwerts zum vorhergesagten Wert sein, wobei auch die Alarmabstände nicht über die gesamte Zeitdauer gleich sein müssen.

Ein zweiter oberer und ein zweiter unterer statischer Grenzwert sorgen dafür, dass ein kritischer Systemzustand während eines Prozesses niemals überschritten werden kann. Liegt der vorhergesagte jeweilige erste obere Grenzwert über dem jeweiligen zweiten oberen Grenzwert, wie dies in Fig. 3 im Zeitintervall t1 bis t2 der Fall ist, so gilt der zweite obere Grenzwert als nicht zu überschreitender Maximalwert. Entsprechendes gilt für den zweiten unteren Grenzwert im Zeitintervall t3 bis t4.

Es kann ein Minimalabstand definiert werden, den der dynamische Alarm-Grenzwert vom statischen Grenzwert mindestens einhalten muss.

Hierzu werden die ersten unteren Grenzwerte, die veränderbar beziehungsweise dynamisch anpassbar sind, mit einem zweiten unteren, statischen Grenzwert verglichen. Die ersten oberen Grenzwerte, die veränderbar beziehungsweise dynamisch anpassbar sind, werden mit einem zweiten oberen, statischen Grenzwert verglichen.

Je nach Konfiguration eines Systems kann der zweite obere Grenzwert oder kann der zweite untere Grenzwert oder können sogar beide Grenzwerte entfallen beziehungsweise können weitere dynamische und / oder statische Alarm-Grenzwerte und/oder Alarmgrenzen hinzugefügt und betrachtet werden.

Weiter ist denkbar, dass statt eines zweiten oberen und statt eines zweiten unteren Grenzwerts oder einer vorbestimmbaren Alarmgrenze für den ersten oberen und ersten unteren Grenzwert ein Maximum bzw. ein Minimum festgelegt wird, welches nicht über- oder unterschritten werden darf.

Das Verfahren gemäß Fig. 3 findet insbesondere im Bereich von Versorgungseinrichtungen wie beispielsweise der Wasser- oder Gasversorgung aber auch der chemischen Industrie Anwendung, ist jedoch auch auf nahezu alle anderen technischen Bereiche wie beispielsweise der Prozessautomation, Energieerzeugung Energieverteilung, Energieversorgung sowie im Kraftwerksbereich einsetz- und anwendbar. Insbesondere in der Wasserversorgung können vergleichsweise große Schwankungen des stündlichen und/oder täglichen Wasserverbrauchs auftreten. Mit Hilfe von historischen Daten, Erfahrungswerten und geeigneten Signalverarbeitungsmethoden kann ein künftiger Wasserverbrauch vorausberechnet und damit prognostiziert werden.

Diese Vorausberechnungen und Vorhersagen dienen dem jeweiligen Versorgungsunternehmen insbesondere zur Optimierung des Betriebs von beispielsweise Pump- oder Umspannstationen und der Bereitstellung des benötigten Wassers, Gases oder der jeweils benötigten Energie mit dem jeweilig erforderlichen Druck oder der jeweiligen Spannung. In Abhängigkeit vom prognostizierten Verbrauch können nun die Grenzwerte für die benötigte Leistung (Strom und Spannung), Durchflussmengen und Drücke in den jeweiligen Versorgungsleitungen vorausberechnet und damit sinnvoll dynamisch eingestellt werden.

Ein beispielsweise zu erwartender künftiger Wasserverbrauch kann insbesondere stündlich ermittelt werden. Mit jeder neuen, den Wasserverbrauch betreffenden Prognose werden auch die zukünftigen Grenzwerte für Durchflussmengen und Drücke berechnet und vorhergesagt, die in einem kommenden Zeitintervall gelten sollen.

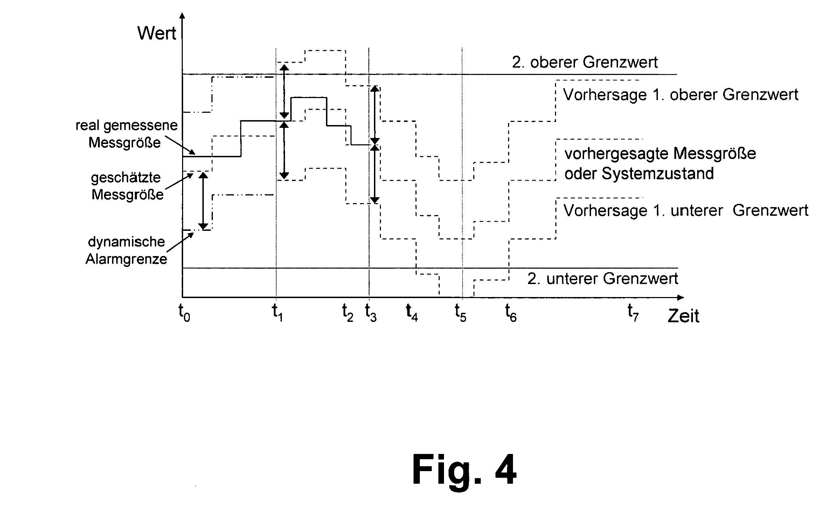

Fig. 4 zeigt ein Zeit-Wert-Diagramm, in welchem zu bestimmten Zeitpunkten zu messende Werte (Messgrößen oder Systemzustand) durch Schätzung und/oder in Anlehnung von historischen und/oder empirischen Informationen vorhergesagt werden. Häufig wird eine Schätzung von zu messenden Werten bzw. Messgrößen nicht ständig, sondern nur zu bestimmten Zeitpunkten durchgeführt. Dies kann auch für simulierte und berechnete Werte gelten beziehungsweise Anwendung finden.

Der jeweils erste untere und der jeweils erste obere Grenzwertverlauf werden in Abhängigkeit von geschätzten, zu messenden Werten berechnet und vorhergesagt. Die zu messenden Werte werden zu Beginn eines oder mehrerer Zeitintervalle geschätzt.

In Fig. 4 erfolgt die Schätzung des real zu messenden, zu simulierenden oder zu berechnenden Wertes zu den Zeitpunkten t0, t1, t3 und t5. Diese Zeitpunkte werden festgelegt. Weicht der real gemessene Wert zu stark vom geschätzten bzw. vorhergesagten Wert ab, wird dies erkannt und es kann eine neue Schätzung eingeleitet werden. Diese Schätzung berücksichtigt historische Informationen oder Signalmodelle, so dass ein neu sich entwickelnder Fehler im Prozess, der zu einer Änderung der gemessenen, simulierten und/oder berechneten Größe führt, den geschätzten Grenzwertverlauf nur bedingt beeinflussen wird und es somit zu einer Auslösung eines Alarms kommt. Durch die Berücksichtigung von historischen Informationen oder Signalmodelle wird verhindert, dass die dynamischen Grenzwertverläufe sich automatisch an einen Fehler im Prozess / System anpassen und somit erst sehr spät ein Alarm ausgelöst würde. Außerdem erfolgt, wo notwendig, eine Vorverarbeitung der gemessenen, simulierten und/oder berechneten Signalen, die unerwünschte Signaleigenschaften wie zum Beispiel Ausreißer erkennt und korrigiert. Außerdem kann diese Vorverarbeitung von Signalen auch Trends in den Signalen erkennen und so sich langsam entwickelnder Fehler im Prozess erkennen und ein langsames Wegdriften der dynamischen Alarmgrenzen verhindern. Es kann zwischen zwei Schätzungen eine minimale Zeitdauer Δt festgelegt werden, in der es zu keiner Neuberechnung der geschätzten dynamischen Grenzwerte kommen darf, um eine ständige Neuberechnung im Fehlerfall zu verhindern. Stattdessen kann in diesem Fall ein entsprechender Alarm ausgelöst werden, da dies auf einen Fehler im Prozess hindeutet.

Übersteigt nach einer neuen Schätzung der gemessene, simulierte und/oder berechnete Wert den oberen Grenzwert, beziehungsweise untersteigt er den unteren Grenzwert wird ein Alarm ausgelöst, da es sich dann um einen Fehler im Prozess und/oder Betrieb handelt. Schätzungen müssen vertrauenswürdig sein und müssen den Betrieb von technischen Anlagen unterstützen, das heißt eine Abweichung von der Schätzung eines zu ermittelnden Wertes bedingt einen Alarm.

Die prognostizierten bzw. vorhergesagten Grenzwerte im Zeitintervall t0 bis t1 basieren auf der Schätzung eines real zu messenden oder andersartig zu ermittelnden, vorhergesagten Werts zum Zeitpunkt t0.

In der Realität folgt der real gemessene und/oder ermittelte Wert nur in einem gewissen Rahmen dem geschätzten bzw. vorhergesagten Wert. Die Alarm-Abstände zwischen geschätzten Werten und Grenzwerten sind so gewählt, dass erlaubte Abweichungen zwischen geschätzten Werten und real gemessenen Werten keine Fehlalarmsignale auslösen und gewünschte Alarmsignale zuverlässig gegeben werden. Die vorhergesagten Werte können zum Beispiel auf (Signal)Modellen zur Simulation basieren, welche den Idealzustand darstellen, das heißt das einer Abweichung des realen vom vorhergesagten Wert eine "unerwünschte" beziehungsweise "ungewünschte" Veränderung im Prozess zu Grunde liegen kann, wobei eine vergleichsweise hohe Qualität der Simulationsmodelle sicherzustellen ist.

Hierzu werden die unteren und/ oder oberen Alarm-Grenzwerte in Abhängigkeit von vorhergesagten, zu messenden Werten derart gewählt und berechnet, dass die Differenz zwischen einem vorhergesagten, zu messenden Wert und einem oberen Alarm-Grenzwert größer Null und die Differenz zwischen einem vorhergesagten, zu messenden Wert und einem unteren Alarm-Grenzwert kleiner Null ist.

Die gemessenen Werte werden mit einem jeweiligen ersten unteren, veränderlichen und einem zweiten unteren, statischen Grenzwert und/ oder mit einem jeweiligen ersten oberen, veränderlichen und einem zweiten oberen, statischen Grenzwert verglichen. Es ist möglich weitere dynamische und / oder statische Alarm-Grenzwerte und/oder Alarmgrenzen dem System hinzuzufügen und zur Alarmgenerierung zu betrachten.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Die vorliegende Erfindung umfasst auch beliebige Kombinationen bevorzugter Ausführungsformen oder Weiterbildungen, sofern diese sich nicht gegenseitig ausschließen.

## Patentansprüche

1. Verfahren zur effizienten Überwachung eines Prozesses und/oder einer technischen Anlage und/oder eines Versorgungsnetzes, wobei wenigstens eine untere und/oder wenigstens eine obere Alarmgrenze vorausschauend bestimmt und/oder Kenn- und/oder Messgrößen sowie diesbezügliche Werte des jeweiligen Prozesses und/oder der jeweiligen technischen Anlage ermittelt werden und mit vorausschauend bestimmten Alarmgrenzwerten wenigstens einer unteren und/ oder wenigstens einer oberen Alarmgrenze verglichen werden und wobei bei Unterschreiten einer unteren Alarmgrenze oder bei Überschreiten einer oberen Alarmgrenze durch eine ermittelte Größe und/oder einen diesbezüglich ermittelten Wert, insbesondere einen gemessenen, simulierten oder berechneten Wert, ein Alarmsignal generiert wird, und wobei wenigstens eine untere und/oder wenigstens eine obere Alarmgrenze zustandsbasiert und/oder umgebungsabhängig änderbar und dynamisch, insbesondere gemäß dem Prozess- und/oder Anlagenverhalten, anpassbar ist.

2. Verfahren nach Anspruch 1, **dadurch gekennzeichnet, dass** die vorausschauende Vorbestimmung wenigstens einer unteren und/oder einer oberen Alarmgrenze und/oder die jeweilige Grenzwert- beziehungsweise Alarmgrenzenanpassung automatisiert durchführbar ist.

3. Verfahren nach Anspruch 1 oder 2, **dadurch gekennzeichnet, dass** mindestens eine untere und/ oder eine obere Alarmgrenze in Abhängigkeit von wenigstens einer prozessinternen oder prozessexternen Peripheriegröße änderbar und/oder anpassbar ist.

4. Verfahren nach einem der Ansprüche 1 oder 2, **dadurch gekennzeichnet, dass** mindestens ein unterer und/ oder oberer Alarmgrenzwert in Abhängigkeit von wenigstens einem gemessenen und/oder simulierten und / oder berechneten Wert einer Kenn- oder Messgröße änderbar ist.

5. Verfahren nach einem der vorherigen Ansprüche, **dadurch gekennzeichnet, dass** die Ermittlung der Kenn- und/oder Messgrößen sowie ihrer Werte mittels Messung, modellbasierte Simulation und/oder Berechnung durchführbar ist.

6. Verfahren nach einem der vorherigen Ansprüche, **dadurch gekennzeichnet, dass** die Ermittlung der Kenn- und/oder Messgrößen sowie ihrer Werte ereignisgesteuert, zeitgesteuert und/oder mittels manueller Anweisung initiierbar und/oder durchführbar ist.

7. Verfahren nach einem der Ansprüche 1 bis 5, **dadurch gekennzeichnet, dass** mindestens ein unterer und/oder oberer Alarmgrenzwert oder eine Alarmgrenze vorausschauend ermittelt werden, indem in Abhängigkeit einer Vorhersage von äußeren Umgebungszuständen oder internen Prozesszuständen die jeweiligen Kenn- und/oder Messgrößen sowie die diesbezüglichen Werte vorausschauend und/oder zeitabhängig ermittelt werden und anhand der ermittelten Kenn- und/oder Messgrößen für den jeweiligen Zeitpunkt und bis zur nächsten Vorhersage und/oder einem vorbestimmbaren Zeitpunkt und/oder innerhalb einem vorbestimmbaren Zeitintervall ein unterer und/oder ein oberer Alarmgrenzwert festgelegt wird.

8. Verfahren nach einem der Ansprüche 1 bis 7, **dadurch gekennzeichnet, dass** mindestens ein unterer und/ oder ein oberer Alarmgrenzwert in Abhängigkeit von vorhergesagten und/oder vorausschauend ermittelten Kenn- und/oder Messgrößen sowie diesbezüglicher Werte, vorausschauend bestimmt, insbesondere vorhergesagt, wird.

9. Verfahren nach einem der vorherigen Ansprüche, **dadurch gekennzeichnet, dass** zur vorausschauenden Ermittlung von Alarmgrenzen, insbesondere mittels Vorhersage von äußeren Umgebungszuständen oder internen Prozesszuständen, eine Abschätzung der Kenn- und/oder Messgrößen sowie der diesbezüglichen Werte durchgeführt wird, wobei der zukünftige Verlauf von Mess-, Simulations- oder Berechnungs-Größen und/oder diesbezüglicher Werte unter Verwendung und/oder Anwendung von statistischen Methoden, insbesondere der Signalverarbeitung, Expertensystemen, historischen Informationen und/oder Erfahrungswerten, abgeschätzt und darauf basierend die jeweiligen Alarmgrenzen bestimmt werden.

10. Verfahren nach einem der vorherigen Ansprüche, **dadurch gekennzeichnet, dass** die zu ermittelnden Kenn- und/oder Messgrößen sowie diesbezüglichen Werte zu Beginn eines oder mehrerer Zeitintervalle vorausschauend bestimmt, werden.

11. Verfahren nach einem der vorherigen Ansprüche, **dadurch gekennzeichnet, dass** die unteren und/ oder oberen Alarmgrenzwerte derart gewählt und ermittelt, insbesondere berechnet werden, dass der Betrag der Differenz zwischen einem Alarmgrenzwert und einem vorausschauend ermittelten zukünftigen Wert ungleich Null ist.

12. Verfahren nach einem der vorherigen Ansprüche, **dadurch gekennzeichnet, dass** erste untere Alarmgrenzwerte, die verändert werden, mit wenigstens einem zweiten unteren, statischen Alarmgrenzwert verglichen werden und/ oder dass erste obere Alarmgrenzwerte, die verändert werden, mit wenigstens einem zweiten oberen, statischen Grenzwert verglichen werden und/oder dynamisch derart angepasst werden, dass die Differenz zwischen den jeweiligen dynamischen und statischen Alarmgrenzwerten, insbesondere den jeweiligen Alarmgrenzen, einen vorbestimmbaren Mindestabstand nicht unterschreiten oder nicht überschreiten.

13. Verfahren nach einem der vorherigen Ansprüche, **dadurch gekennzeichnet, dass** die ermittelten Werte, insbesondere gemessenen und/oder simulierten und/oder berechneten Werte, mit wenigstens einem ersten unteren, veränderlichen und wenigstens einem zweiten unteren, statischen Alarmgrenzwert und/oder mit einem ersten oberen, veränderlichen und wenigstens einem zweiten oberen, statischen Alarmgrenzwert verglichen werden und bei Überschreiten wenigstens einer oberen Alarmgrenze und/oder bei Unterschreiten wenigstens einer unteren Alarmgrenze ein Alarm generiert wird, insbesondere ein Alarmsignal ausgelöst und/oder eine Alarmmeldung ausgegeben wird.

14. Verfahren nach einem der voranstehenden Ansprüche, **dadurch gekennzeichnet, dass** die ermittelten und/oder zu ermittelnden Kenn- und/oder Messgrößen sowie diesbezüglichen Werte Drücke und/ oder Durchflussmengen und/oder Temperaturen und/oder wenigstens eine beliebige andere physikalische Größe umfassen.

15. System zur effizienten Überwachung eines Prozesses und/oder einer technischen Anlage, und/oder eines Versorgungsnetzes mit einer Überwachungseinrichtung, welche Kenn- und/oder Messgrößen des jeweiligen Prozesses und/oder der jeweiligen technischen Anlage ermittelt sowie diesbezügliche Werte erfasst, insbesondere misst, simuliert oder berechnet, und mit vorausschauend bestimmten Alarmgrenzwerten wenigstens einer unteren und/oder einer oberen Alarmgrenze vergleicht und die Überwachungseinrichtung bei Unterschreiten einer unteren Alarmgrenze oder bei Überschreiten einer oberen Alarmgrenze durch einen ermittelten Wert, insbesondere einen gemessenen, simulierten oder berechneten Wert, einen Alarm generiert, wobei mittels der Überwachungseinrichtung wenigstens eine untere und/oder wenigstens eine obere Alarmgrenze zustandsbasiert und/oder umgebungsabhängig änderbar und dynamisch, insbesondere gemäß dem Prozess- und/oder Anlagenverhalten, anpassbar ist.

16. System nach Anspruch 15, **dadurch gekennzeichnet, dass** die Überwachungseinrichtung Alarmgrenzenüberschreitungen und/oder Alarmgrenzenunterschreitungen meldet.

17. Vorrichtung nach Anspruch 15 oder 16, **dadurch gekennzeichnet, dass** Mittel zur Ausführung des Verfahrens nach einem der Ansprüche 1 bis 14 vorgesehen sind.
